# NEUE EUROPÄISCHE PATENTSCHRIFT

(11) **EP 2 724 103 B2**
(45) Veröffentlichungstag und Bekanntmachung des Hinweises auf die Entscheidung über den Einspruch: **27.02.2019**
(45) Hinweis auf die Patenterteilung: 22.04.2015
(21) Anmeldenummer: 12740657.7
(22) Anmeldetag: 15.06.2012
(51) Int. Cl.: F27B 7/42, F27D 19/00, G01B 21/20, G01B 11/16, G01B 11/25, F27D 21/00, F27D 21/04, F27D 21/02

(54) **VERFAHREN UND VORRICHTUNG ZUM ERFASSEN VON GERADHEITSABWEICHUNGEN UND/ODER VERFORMUNGEN BEI EINEM DREHROHROFEN**
METHOD AND DEVICE FOR DETECTING STRAIGHTNESS DEVIATIONS AND/OR DEFORMATIONS IN A ROTARY KILN
PROCÉDÉ ET DISPOSITIF DE DÉTECTION D'ÉCARTS DE RECTITUDE ET/OU DE DÉFORMATIONS SUR UN FOUR À TUBE ROTATIF

(30) Priorität: 27.06.2011 AT 9332011
(43) Veröffentlichungstag der Anmeldung: 30.04.2014
(73) Patentinhaber: Holcim Technology Ltd, 8645 Rapperswil-Jona (CH)
(72) Erfinder: STUTZ, Thomas, CH-8905 Arni (CH)
(74) Vertreter: Keschmann, Marc
(86) Internationale Anmeldenummer: PCT/IB2012/001168
(87) Internationale Veröffentlichungsnummer: WO 2013/001334

(56) Entgegenhaltungen:
- WO-A1-2011/058221
- JP-A- 2008 107 175
- US-A- 5 491 553

## Beschreibung

Die Erfindung betrifft ein Verfahren und eine Vorrichtung zum Erfassen von Geradheitsabweichungen und Verformungen bei einem Drehrohrofen, dessen Drehrohr in axialer Richtung voneinander beabstandete Laufringe aufweist, die jeweils auf Laufrollen abgestützt sind.

Drehrohröfen sind Öfen für kontinuierliche Prozesse in der Verfahrenstechnik und werden zum Beispiel als Klinkeröfen in Zementherstellungsanlagen eingesetzt. Das Drehrohr eines solchen Ofens ist in Längsrichtung leicht geneigt, um mit dem Umlauf des Ofenrohres einen axialen Transport des Materials im Inneren des Ofens herbeizuführen, und zwar von der Einlaufseite zur Auslaufseite. In der Zementindustrie verwendete Drehrohröfen haben typischerweise Längen von 75 bis 80 m, erreichen jedoch manchmal bis zu 150 m, und haben Durchmesser von bis zu 6,5 m. Das Drehrohr des Drehrohrofens weist in axialer Richtung voneinander beabstandete Laufringe auf, die mit dem Drehrohr über Befestigungssysteme verbunden sind, welche thermische Ausdehnungen des Drehrohrs im Betrieb zulassen. Die Laufringe sind auf Laufrollen abgestützt, die jeweils um eine in axialer Richtung der Drehrohrachse verlaufende Achse drehbar gelagert sind. Jedem Laufring sind in der Regel zwei Laufrollen zugeordnet, deren Drehachsen parallel zueinander verlaufen und die in Abstand zueinander angeordnet sind. Durch die Einstellung des Abstands zwischen den beiden jeweils einen Laufring abstützenden Laufrollen kann die Abstützhöhe und die seitliche Position eingestellt werden, wobei darauf abgezielt wird, die Abstützhöhe und die seitliche Position bei allen Laufringen so einzustellen, dass die Drehrohrachse, d.h. die Verbindung der Mittelpunkte der durch alle Laufringe aufgespannten Kreisflächen, über die gesamte Länge des Drehrohrofens gerade verläuft. Geradheitsabweichungen der Drehrohrofenachse, die zum Beispiel auf Grund von Installationstoleranzen, Abnützung von Laufringen, Laufrollen und Laufrollen-Lager während des Betriebes des Ofens hervorgerufen werden können, führen zu einer dynamischen Biegebelastung des Drehrohrmantels und dadurch zu Rissgefahr und erhöhtem Verschleiß.

Abweichungen der Parallelität der Laufrollendrehachsen mit der Drehrohrofenachse führen einerseits zu einer deutlichen Erhöhung der Reibung zwischen Laufring und Laufrollen und andererseits zu einem ungleichmäßigen Kontakt zwischen dem Laufring und den Laufrollen. Beides erhöht den Verschleiß und verringert die Standzeit, d.h. diejenige Zeit, in welcher der Drehrohrofen ohne Unterbrechung arbeiten kann, bis die nächste Wartung durchgeführt werden muss. Dokument WO 2011/058 221 A1 zeigt diese Problematik und offenbart ein Verfahren und Vorrichtung zur Vermessung solcher Abweichungen.

Die Standzeit eines Drehrohrofens wird weiters entscheidend von Verformungen des Drehrohrmantels beeinflusst. Solche Verformungen, die insbesondere auf Grund von hohen Temperaturen entstehen können, haben nichts mit den oben beschriebenen Geradheitsabweichungen der Drehrohrachse zu tun, sondern betreffen insbesondere lokale Abweichungen von der Geradheit des Mantels bzw. der Mantelerzeugenden und die Rundheit des Mantelquerschnitts. Die Verformungen des Drehrohrmantels haben negative Auswirkungen auf die Feuerfestverkleidung im Inneren des Drehrohres.

Die Erfindung zielt nun darauf ab, ein Verfahren und eine Vorrichtung anzugeben, mit denen Geradheitsabweichungen und Verformungen bei einem Drehrohrofen mit großer Genauigkeit erfasst werden können, damit etwaige Abweichungen bzw. Verformungen frühzeitig erkannt und behoben werden können, um die Standzeit eines Drehrohrofens zu verlängern. Die Erfassung der Geradheitsabweichungen bzw. der Verformungen soll möglichst ohne Unterbrechung des laufenden Betriebes des Drehrohrofens möglich sein. Weiters sollen Eingriffe in die bestehende Konstruktion des jeweiligen Drehrohrofens vermieden werden. Schließlich soll eine einfache Messung an bestehenden Öfen möglich sein.

Zur Lösung dieser Aufgabe ist gemäß einem ersten Aspekt der Erfindung ein Verfahren gemäss Anspruch 1 vorgesehen. Dadurch, dass die Objekte berührungslos abgetastet werden, muss lediglich dafür Sorge getragen werden, dass die wenigstens eine Abtastvorrichtung neben dem Drehrohrofen aufgestellt werden kann, konstruktive Veränderungen des Ofens selbst sind jedoch nicht erforderlich. Optisch arbeitende Abtastvorrichtungen weisen eine hohe Genauigkeit auf, sodass auch relativ geringe Abweichungen bzw. Verformungen erfasst werden können. Beispielsweise ist es bei bestimmten Drehrohröfen günstig, wenn Abweichungen und Verformungen im Bereich von wenigen Millimetern erfasst werden können. Optisch arbeitende Abtastvorrichtungen haben in der Regel einen bestimmten Erfassungswinkel, sodass mit einer einzigen Abtastvorrichtung mehrere der oben genannten Objekte gleichzeitig erfasst werden können.

Dadurch, dass das erfindungsgemäße Verfahren auf der Erfassung und Verarbeitung dreidimensionaler Positionsdaten beruht, kann mit erprobten software-technischen Mitteln eine Auswertung vorgenommen werden, wobei die Verarbeitung der Positionsdaten zu einem dreidimensionalen Modell der abgetasteten Objekte in einfacher Weise möglich ist. Die wenigstens eine Abtastvorrichtung kann hierbei so arbeiten, dass sie eine Vielzahl von Punkten auf der Oberfläche des abzutastenden Objekts nach einem vorgegebenen Muster oder Raster abtastet, sodass zu jedem Punkt dreidimensionale Positionsdaten gewonnen werden. Aufgrund der Zuordnung der dreidimensionalen Positionsdaten zu dem entsprechend Punkt innerhalb des vorgegebenen Musters bzw. Rasters kann das dreidimensionale Modell in einfacher Weise erstellt und ggf. auf einer Anzeigevorrichtung dargestellt werden.

Ein weiterer Vorteil des erfindungsgemäßen Verfahrens ist, dass aufgrund der berührungslosen Arbeitsweise das Abtasten bevorzugt auch während des Betriebes des Drehrohrofens erfolgen kann.

Da Drehrohröfen sehr lang sein können, ist es in der Regel nicht möglich, die gesamte Ofenlänge mit einer Abtastvorrichtung zu erfassen. Die Erfindung sieht daher vor, dass mit der wenigstens einen Abtastvorrichtung ein axialer Teilbereich des Drehrohrofens abgetastet wird, dass Abtastungen in einer Mehrzahl von entlang der Ofenlänge verteilten axialen Teilbereichen vorgenommen werden, bei denen jeweils mindestens ein Referenzpunkt oder Referenzobjekt miterfasst wird, und dass die dreidimensionalen Positionsdaten auf den jeweiligen Referenzpunkt bzw. das Referenzobjekt bezogen werden, um relative Positionsdaten zu erhalten, und die relativen Positionsdaten mehrerer axialer Teilbereiche zusammengeführt und gemeinsam ausgewertet werden. Der Referenzpunkt kann beispielsweise ein eigens für diesen Zweck angebrachtes ortsfestes Objekt sein. Alternativ besteht auch die Möglichkeit, auf eigene Referenzpunkte zu verzichten und als Referenzobjekt nur die Geometrie der Laufringe für das Zusammenfügen der verschiedenen Abtastungen zu verwenden. Die entlang der Ofenlänge verteilten Abtastungen können hierbei mit einer einzigen Abtastvorrichtung vorgenommen werden, die nach jedem Abtastvorgang entlang der Ofenlänge verschoben werden muss, um am neuen Aufstellungsort jeweils einen neuen Abtastvorgang zu starten. Es ist aber auch möglich, mehrere Abtastvorrichtungen zu verwenden, die entlang der Ofenlänge verteilt angeordnet sind. Der Erfassungsbereich der einzelnen Abtastungen kann sich bevorzugt überlappen, wobei im Überlappungsbereich bevorzugt jeweils mindestens ein, besser mehrere der genannten Referenzpunkte bzw. -objekte angeordnet sind, damit benachbarte Abtastungen auf den gleichen ortsfesten Punkt bezogen und in der Folge gemeinsam ausgewertet werden können.

Bevorzugt wird der Drehrohrofen von beiden Seiten abgetastet, d.h. die wenigstens eine Abtastvorrichtung wird an beiden Seiten der durch die Drehachse verlaufenden, vertikalen Längsmittelebene des Drehrohrs positioniert. Dadurch können beide der jeweils einem Laufring zugeordneten Laufrollen abgetastet werden.

Geradheitsabweichungen der Drehrohrofenachse werden bevorzugt so erfasst, dass beim Abtasten der Laufringe Umfangspunkte der Laufringe repräsentierende dreidimensionale Positionsdaten erhalten werden, dass an die Umfangspunkte eines jeden Laufrings rechnerisch ein Kreis angepasst wird, der Mittelpunkt jedes Kreises ermittelt wird, die Ofenachse rechnerisch als Verbindung der Mittelpunkte erhalten wird, die Ofenachse mit einer Geraden verglichen und allfällige Abweichungen ausgegeben werden.

Verformungen des Drehrohrofenmantels werden bevorzugt so erfasst, dass beim Abtasten der Mantelfläche des Drehrohres Mantelpunkte repräsentierende dreidimensionale Positionsdaten erhalten werden, die mit Drehwinkeldaten verknüpft werden, die den momentanen Drehwinkel des Drehrohres zum Zeitpunkt der Abtastung des jeweiligen Mantelpunktes repräsentieren. Dadurch kann der Mantel während des laufenden Betriebs, d.h. während der Rotation des Drehrohrs, abgetastet werden. Mit Vorteil wird hierbei so vorgegangen, dass aus den die Mantelpunkte repräsentierenden dreidimensionalen Positionsdaten und den jeweils zugeordneten Drehwinkeldaten ein dreidimensionales Modell des Drehrohrs erstellt wird. Das dreidimensionale Modell kann danach bevorzugt mit einem zylindrischen Vergleichsmodell verglichen werden, wobei lokale Abweichungen des dreidimensionalen Modells vom Vergleichsmodell angezeigt werden. Abweichungen können sich hierbei in verschiedener Hinsicht ergeben. Bevorzugt werden lokale Abweichungen des Querschnitts des Drehrohrs von einem kreisförmigen Querschnitt und Abweichungen des Verlaufs der Achse des Drehrohrs von einem geraden Verlauf gesondert voneinander angezeigt.

Parallelitätsabweichungen der Laufrollen werden bevorzugt so erfasst, dass das Abtasten der Laufrollen das Abtasten von an den beiden Enden der Laufrollendrehachsen angeordneten Referenzobjekten, insbesondere Referenzkugeln, umfasst. Mit Vorteil wird dabei so vorgegangen, dass die Rotationsachse der Laufrollen rechnerisch als Verbindung der Referenzobjekte erhalten wird und dass die Parallelität der Rotationsachse mit der Ofenachse ermittelt und Abweichungen von der Parallelität angezeigt werden.

Im Rahmen des erfindungsgemäßen Verfahrens erfolgt das Abtasten mittels 3D-Laserscanning. Laserscanning bezeichnet das zeilen- oder rasterartige Überstreichen von Oberflächen oder Körpern mit einem Laserstrahl. Beim 3D-Laserscanning wird die Oberflächengeometrie des abgetasteten Objekts mittels Pulslaufzeit, Phasendifferenz im Vergleich zu einer Referenz oder durch Triangulation von Laserstrahlen digital erfasst. Dabei entsteht eine diskrete Menge von dreidimensionalen Abtastpunkten, die als Punktwolke bezeichnet wird. Die Koordinaten der gemessenen Punkte werden aus den Winkeln und der Entfernung in Bezug zum Ursprung (Gerätestandort) ermittelt. Anhand der Punktwolke können entweder Einzelmaße wie z.B. Längen und Winkel bestimmt werden oder es wird aus ihr eine geschlossene Oberfläche aus Dreiecken konstruiert (Vermaschung oder Meshing) und z.B. in der 3DComputergrafik zur Visualisierung verwendet.

Zur Lösung der der Erfindung zugrunde liegenden Aufgabe ist gemäß einem zweiten Aspekt der Erfindung eine Vorrichtung gemäss Anspruch 12 vorgesehen.

Erfindungsgemäss ist die Abtastvorrichtung als 3D-Laserscanner ausgebildet.

Der Erfassungsbereich der wenigstens einen Abtastvorrichtung entspricht einem axialer Teilbereich des Drehrohrofens, wobei eine oder eine Mehrzahl von Abtastvorrichtungen entlang der Ofenlänge verteilt angeordnet ist, im Erfassungsbereich jeder Abtastvorrichtung wenigstens ein ortsfester Referenzpunkt oder wenigstens ein Referenzobjekt angeordnet sind, und die Recheneinheit ausgebildet ist, um die dreidimensionalen Positionsdaten auf den jeweiligen Referenzpunkt zu beziehen, um relative Positionsdaten zu erhalten, und die relativen Positionsdaten mehrerer axialer Teilbereiche zusammenzuführen und gemeinsam auszuwerten.

Bevorzugt ist an jeder Seite des Drehrohrofens wenigstens eine Abtastvorrichtung angeordnet.

Bevorzugt sind die Abtastvorrichtungen auf die Laufringe gerichtet, sodass Umfangspunkte der Laufringe repräsentierende dreidimensionale Positionsdaten erhalten werden, wobei die Positionsdaten der Recheneinheit zugeführt sind und die Recheneinheit Verarbeitungsmittel aufweist, um an die Umfangspunkte eines jeden Laufrings rechnerisch einen Kreis anzupassen, den Mittelpunkt jedes Kreises zu ermitteln, die Ofenachse rechnerisch als Verbindung der Mittelpunkte zu erhalten und die Ofenachse mit einer Geraden zu vergleichen, und wobei Ausgabemittel vorgesehen sind, die mit der Recheneinheit zur Ausgabe von allfällige Abweichungen der Ofenachse von der Geraden zusammenwirken.

Bevorzugt ist die wenigstens eine Abtastvorrichtung auf die Mantelfläche des Drehrohres gerichtet, sodass Mantelpunkte repräsentierende dreidimensionale Positionsdaten erhalten werden, wobei wenigstens ein Drehwinkelsensor zur Erfassung von den momentanen Drehwinkel des Drehrohrs repräsentierenden Drehwinkeldaten oder ein Impulssensor zur Ermittlung der Rotation des Drehrohrs vorgesehen ist und die Positionsdaten und die Drehwinkeldaten der Recheneinheit zugeführt sind, wobei die Positionsdaten mit denjenigen Drehwinkeldaten verknüpft sind, die den momentanen Drehwinkel des Drehrohres zum Zeitpunkt der Abtastung des jeweiligen Mantelpunktes repräsentieren.

Bevorzugt sind Verarbeitungsmittel der Recheneinheit ausgebildet, um aus den die Mantelpunkte repräsentierenden dreidimensionalen Positionsdaten und den jeweils zugeordneten Drehwinkeldaten ein dreidimensionales Modell des Drehrohrs zu erstellen.

Bevorzugt sind die Verarbeitungsmittel ausgebildet, um das dreidimensionale Modell mit einem zylindrischen Vergleichsmodell zu vergleichen, wobei Ausgabemittel vorgesehen sind, die mit den Verarbeitungsmittel zu Ausgabe von lokalen Abweichungen des dreidimensionalen Modells vom Vergleichsmodell zusammenwirken.

Bevorzugt ist die wenigstens eine Abtastvorrichtung auf an den beiden Enden der Laufrollenwelle angeordnete Referenzobjekte, insbesondere Referenzkugeln, gerichtet.

Bevorzugt sind Verarbeitungsmittel der Recheneinheit ausgebildet, um die Rotationsachse der Laufrollen rechnerisch als Verbindung der Referenzobjekte zu erhalten und die Parallelität der Rotationsachse mit der Ofenachse zu ermitteln, wobei Ausgabemittel vorgesehen sind, die mit der Recheneinheit zur Ausgabe von Abweichungen von der Parallelität zusammenwirken.

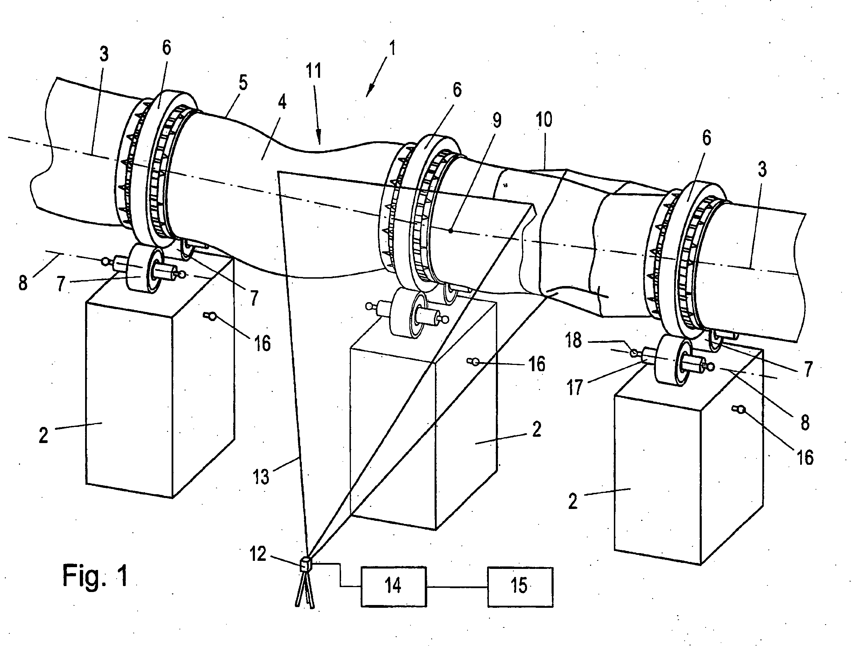

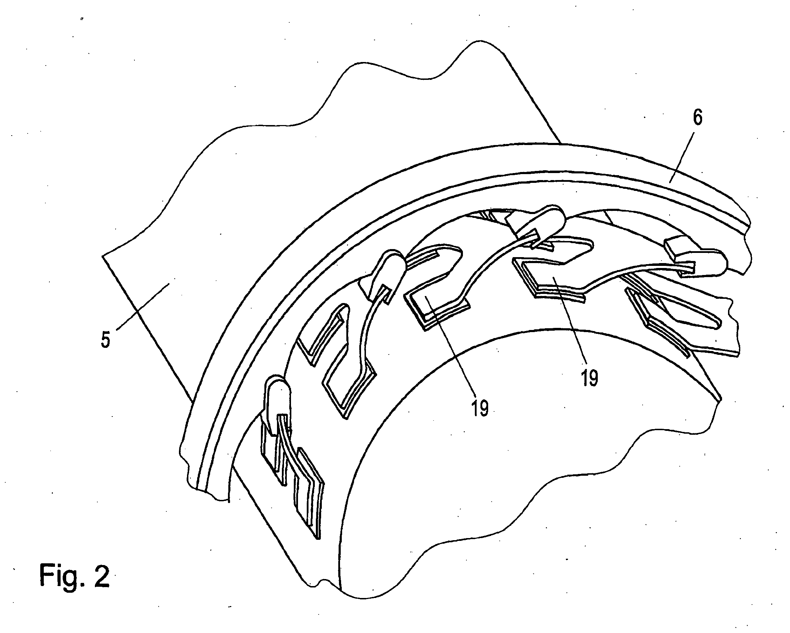

Die Erfindung wird nachfolgend anhand eines in der Zeichnung schematisch dargestellten Ausführungsbeispiels näher erläutert. In dieser zeigen Fig.1 eine perspektivische Ansicht eines Drehrohrofens von der Seite und Fig. 2 eine Detailansicht der Festlegung der Laufringe am Drehrohrmantel.

In Fig.1 ist ein axialer Teilbereich eines Drehrohrofens 1 dargestellt, wobei der Drehrohrofen 1 auf drei ortsfesten Rollenböcken 2 abgestützt ist. Der Drehrohrofen 1 weist ein um die Achse 3 drehbar gelagertes Drehrohr 4 auf, dessen Mantel mit 5 bezeichnet ist. Am Mantel 5 des Drehrohrs 4 sind beim dargestellten Beispiel drei voneinander beabstandete Laufringe 6 über ein in Fig.2 näher dargestelltes Befestigungssystem befestigt. Der Antrieb des Drehrohrs 4 ist der Übersichtlichkeit halber nicht dargestellt. Der Antrieb erfolgt in der Regel über einen mit dem Mantel 5 des Drehrohrs 4 drehfest verbundenen Zahnkranz. Ein Antrieb für einen derartigen Zahnkranz ist bspw. der WO 2010/067183 A1 zu entnehmen.

Jeder Laufring 6 ist auf zwei zugeordneten Laufrollen 7 abgestützt, wobei die Laufrollen 7 jeweils um eine zur Drehrohrachse 3 parallel angeordnete Drehachse 8 drehbar gelagert sind.

Die Drehachse 3 des Drehrohrs 4 ist als diejenige Achse definiert, die sich aus der Verbindung der gedachten Mittelpunkte der einzelnen Laufringe 6 ergibt. Im Idealfall sollten die Mittelpunkte 9 der Laufringe 6 auf einer Geraden liegen. In der Praxis ergeben sich jedoch Abweichungen dahingehend, dass, wie in Fig.1 dargestellt, der Mittelpunkt des mittleren Laufrings zu tief liegt, sodass die Verbindung der Mittelpunkte des linken und des mittleren Laufrings 6 zur Verbindung der Mittelpunkte des mittleren und des rechten Laufrings 6 einen stumpfen Winkel einschließen. In der Praxis werden maximale Abweichungen in Höhenrichtung und/oder in seitlicher Richtung von 3 bis 10 mm vom Idealzustand toleriert. Darüber hinausgehende Abweichungen würden zu einem deutlichen Anstieg der dynamischen Biegebelastung des Drehrohrs 4 und damit verbunden zu einer Erhöhung des Verschleißes führen.

In Fig.1 ist weiters ersichtlich, dass der mit 10 angedeutete axiale Bereich des Drehrohrmantels 5 Verformungen dergestalt aufweist, dass der Mantelquerschnitt von einer kreisrunden Form abweicht. In dem mit 11 schematisch angedeuteten axialen Bereich des Drehrohrofens weist das Drehrohr 4 ausgehend von der idealen Kreiszylinderform eine Verformung dahingehend auf, dass die Erzeugungen des Zylinders nicht mehr gerade,' sondern gebogen verlaufen.

Um die verschiedenen Geradheitsabweichungen und Verformungen beim Drehrohrofen mit hoher Genauigkeit erfassen zu können, ist erfindungsgemäß ein 3D-Laserscanner 12 seitlich neben dem Drehrohrofen aufgestellt, dessen Erfassungsbereich mit 13 bezeichnet ist. Der Laserscanner 12 tastet innerhalb des Erfassungsbereichs 13 die Oberfläche des Drehrohrs 4 des Laufrings 6 sowie der Laufrollen 7 ab. Aufgrund der Abtastung wird innerhalb des Erfassungsbereichs 13 eine Vielzahl von dreidimensionalen Positionsdaten erhalten, die einer Recheneinrichtung 14 zugeführt werden. In der Recheneinheit 14 werden die dreidimensionalen Positionsdaten ausgewertet, wobei das Ergebnis der Auswertung auf einer schematisch dargestellten Ausgabeeinrichtung 15, wie bspw. einem Bildschirm dargestellt werden. Innerhalb des Erfassungsbereichs 13 ist ein ortsfestes, am Auflagebock 2 befestigtes Referenzobjekt 16 angeordnet, das bei der Ermittlung der Positionsdaten als Bezugspunkt herangezogen wird. Im vorliegenden Ausführungsbeispiel erstreckt sich der Erfassungsbereich 13 des Laserscanners 12 lediglich über einen axialen Teilbereich des Drehrohrofens 1 und es müssen daher nacheinander mehrere Messungen mit entsprechend in axialer Richtung verschobenem Laserscanner 12 vorgenommen werden, wobei sich die jeweiligen Erfassungsbereiche 13 bevorzugt überlappen. Alternativ wird eine entsprechende Mehrzahl von Laserscannern 12 eingesetzt und das Abtasten des Drehrohrofens 1 erfolgt dementsprechend mit der Mehrzahl von Laserscannern 12 gleichzeitig. Die Laserscanner 12 können entweder lediglich an einer Seite des Drehrohrofens angeordnet werden oder an beiden Seiten um eine genauere Auswertung zu ermöglichen. Um die Messungen durch mehrere Laserscanner 12 bzw. mehrere nacheinander an axial zueinander versetzten Bereichen einer gemeinsamen Auswertung zuzuführen, ist in jedem der bevorzugt einander überlappenden Erfassungsbereiche 13 ein Referenzobjekt 16 angeordnet.

Abgesehen von den Bezugsobjekten 16 erfordert das Abtasten der Oberfläche des Drehrohrs 14 sowie der Laufringe 6 keine weiteren Ein- oder Umbauten am Drehrohrofen 1. Für die Erfassung von Abweichungen der Rotationsachse 8 der Laufrollen 7 bei einem zur Drehrohrachse 3 parallelen Verlauf ist es jedoch vorteilhaft, wenn an den Enden der Laufrollenwelle 17 jeweils ein vom Laserscanner 12 erfassbares Referenzobjekt 18 angeordnet ist. Der Verlauf der Rotationsachse 8 der Laufrollen 7 wird hierbei in der Recheneinheit 14 durch die Verbindung der bei den beiden Referenzobjekten 18 ermittelten Positionsdaten ermittelt.

Fig.2 zeigt tangential am Mantel 5 des Drehrohrs 4 abgestützte Platten 19, welche den Drehrohrofen 1 mit dem Laufring 6 verbinden. Durch die federnde Wirkung der Platten 19 kann eine thermische Ausdehnung des Drehrohrs 4 in einfacher Weise ausgeglichen werden.

## Patentansprüche

1. Verfahren zum Erfassen von Geradheitsabweichungen und Verformungen bei einem Drehrohrofen, dessen Drehrohr in axialer Richtung voneinander beabstandete Laufringe aufweist, die jeweils auf Laufrollen abgestützt sind, **dadurch gekennzeichnet, dass** die äußere Mantelfläche (5) des Drehrohres (4), die Laufringe (6) und die Laufrollen (7) und/oder die Wellen (17) der Laufrollen (7) mit Hilfe wenigstens einer als 3D-Laserscanner ausgebildeten Abtastvorrichtung (12) berührungslos abgetastet werden, sodass bezüglich der abgetasteten Objekte dreidimensionale Positionsdaten erhalten werden, und dass die dreidimensionalen Positionsdaten hinsichtlich des Auftretens einer Abweichung der Drehrohrofenachse (3) von einer Geraden, einer Abweichung des Drehrohrs (4) von einer zylindrischen Form und einer Abweichung der Laufrollendrehachsen (8) von einer Parallelen mit der Drehrohrofenachse (3) ausgewertet werden, wobei mit der wenigstens einen Abtastvorrichtung ein axialer Teilbereich (11) des Drehrohrofens (1) abgetastet wird und die Abtastungen in einer Mehrzahl von entlang der Ofenlänge verteilten axialen Teilbereichen (11) vorgenommen werden, bei denen jeweils wenigstens ein ortsfester Referenzpunkt miterfasst wird, und die dreidimensionalen Positionsdaten auf den jeweiligen Referenzpunkt bezogen werden, um relative Positionsdaten zu erhalten, und die relativen Positionsdaten mehrerer axialer Teilbereiche (11) zusammengeführt und gemeinsam ausgewertet werden, wobei die Erfassungsbereiche der einzelnen Abtastungen einander bevorzugt überlappen.

2. Verfahren nach Anspruch 1, **dadurch gekennzeichnet, dass** das Abtasten während des Betriebes des Drehrohrofens (1) erfolgt.

3. Verfahren nach Anspruch 1 oder 2, **dadurch gekennzeichnet, dass** der Drehrohrofen (1) von beiden Seiten abgetastet wird.

4. Verfahren nach Anspruch 1, 2 oder 3, **dadurch gekennzeichnet, dass** beim Abtasten der Laufringe (6) Umfangspunkte der Laufringe (6) repräsentierende dreidimensionale Positionsdaten erhalten werden, dass an die Umfangspunkte eines jeden Laufrings (6) rechnerisch ein Kreis angepasst wird, der Mittelpunkt jedes Kreises ermittelt wird, die Ofenachse rechnerisch als Verbindung der Mittelpunkte (9) erhalten wird, die Ofenachse mit einer Geraden verglichen und allfällige Abweichungen ausgegeben werden.

5. Verfahren nach einem der Ansprüche 1 bis 4, **dadurch gekennzeichnet, dass** beim Abtasten der Mantelfläche (5) des Drehrohres (4) Mantelpunkte repräsentierende dreidimensionale Positionsdaten erhalten werden, die mit Drehwinkeldaten verknüpft werden, die den momentanen Drehwinkel des Drehrohres (4) zum Zeitpunkt der Abtastung des jeweiligen Mantelpunktes repräsentieren.

6. Verfahren nach Anspruch 5, **dadurch gekennzeichnet, dass** aus den die Mantelpunkte repräsentierenden dreidimensionalen Positionsdaten und den jeweils zugeordneten Drehwinkeldaten ein dreidimensionales Modell des Drehrohrs (1) erstellt wird.

7. Verfahren nach Anspruch 6, **dadurch gekennzeichnet, dass** das dreidimensionale Modell mit einem zylindrischen Vergleichsmodell verglichen wird und dass lokale Abweichungen des dreidimensionalen Modells vom Vergleichsmodell angezeigt werden.

8. Verfahren nach einem der Ansprüche 1 bis 7, **dadurch gekennzeichnet, dass** lokale Abweichungen des Querschnitts des Drehrohrs (4) von einem kreisförmigen Querschnitt und Abweichungen des Verlaufs der Achse (3) des Drehrohrs (4) von einem geraden Verlauf gesondert voneinander angezeigt werden.

9. Verfahren nach einem der Ansprüche 1 bis 8, **dadurch gekennzeichnet, dass** das Abtasten der Laufrollen (7) das Abtasten von an den beiden Enden der Laufrollendrehachsen (8) angeordneten Referenzobjekten (18), insbesondere Referenzkugeln, umfasst.

10. Verfahren nach Anspruch 9, **dadurch gekennzeichnet, dass** die Rotationsachse (8) der Laufrollen (7) rechnerisch als Verbindung der Referenzobjekte (18) erhalten wird und dass die Parallelität der Rotationsachse (8) mit der Ofenachse ermittelt und Abweichungen von der Parallelität angezeigt werden.

11. Verfahren nach einem der Ansprüche 1 bis 10, **dadurch gekennzeichnet, dass** der Drehrohrofen (1) ein Klinkerofen einer Zementherstellungsanlage oder Kalkofen einer Kalkherstellungsanlage ist.

12. Drehrohofen mit einer Vorrichtung zum Erfassen von Geradheitsabweichungen und Verformungen des Drehrohrofens (1), insbesondere zur Durchführung eines Verfahrens nach einem der Ansprüche 1 bis 11, wobei das Drehrohr (4) des Drehrohrofens (1) in axialer Richtung voneinander beabstandete Laufringe (6) aufweist, die jeweils auf Laufrollen (7) abgestützt sind, und wobei wenigstens eine berührungslos arbeitende, als 3D-Laserscanner ausgebildete Abtastvorrichtung (12) angeordnet ist, um die äußere Mantelfläche (5) des Drehrohres (4), die Laufringe (6) und die Laufrollen (7) und/oder die Wellen (17) und/oder Wellen-End-Verlängerungen der Laufrollen (7) berührungslos abzutasten, sodass bezüglich der abgetasteten Objekte dreidimensionale Positionsdaten erhalten werden, wobei die dreidimensionalen Positionsdaten einer Recheneinheit (14) zugeführt sind, die eine Auswerteschaltung aufweist, um die dreidimensionalen Positionsdaten hinsichtlich des Auftretens einer Abweichung der Drehrohrofenachse (3) von einer Geraden, einer Abweichung des Drehrohrs (4) von einer zylindrischen Form und einer Abweichung der Laufrollendrehachsen (8) von. einer Parallelen mit der Drehrohrofenachse (3) auszuwerten, wobei der Erfassungsbereich der wenigstens einen Abtastvorrichtung (12) einem axialer Teilbereich (11) des Drehrohrofens (1) entspricht und die eine oder eine Mehrzahl von Abtastvorrichtungen (12) entlang der Ofenlänge verteilt angeordnet ist, wobei die Erfassungsbereiche der Abtastvorrichtungen einander bevorzugt überlappen, und im Erfassungsbereich jeder Abtastvorrichtung (12) wenigstens ein ortsfester Referenzpunkt oder wenigstens ein Referenzobjekt (16) angeordnet ist und die Recheneinheit (14) ausgebildet ist, um die dreidimensionalen Positionsdaten auf den jeweiligen Referenzpunkt zu beziehen, um relative Positionsdaten zu erhalten, und die relativen Positionsdaten mehrerer axialer Teilbereiche (11) zusammenzuführen und gemeinsam auszuwerten.

13. Vorrichtung nach Anspruch 12, **dadurch gekennzeichnet, dass** an jeder Seite des Drehrohrofens (1) wenigstens eine Abtastvorrichtung (12) angeordnet ist.

14. Vorrichtung nach einem der Ansprüche 12 bis 13, **dadurch gekennzeichnet, dass** die Abtastvorrichtungen (12) auf die Laufringe (6) gerichtet sind, sodass Umfangspunkte der Laufringe (6) repräsentierende dreidimensionale Positionsdaten erhalten werden, dass die Positionsdaten der Recheneinheit (14) zugeführt sind und dass die Recheneinheit (14) Verarbeitungsmittel aufweist, um an die Umfangspunkte eines jeden Laufrings (6) rechnerisch einen Kreis anzupassen, den Mittelpunkt (9) jedes Kreises zu ermitteln, die Ofenachse rechnerisch als Verbindung der Mittelpunkte (9) zu erhalten und die Ofenachse mit einer Geraden zu vergleichen, und dass Ausgabemittel (15) vorgesehen sind, die mit der Recheneinheit (14) zur Ausgabe von allfällige Abweichungen der Ofenachse von der Geraden zusammenwirken.

15. Vorrichtung nach einem der Ansprüche 12 bis 14, **dadurch gekennzeichnet, dass** die wenigstens eine Abtastvorrichtung (12) auf die Mantelfläche (5) des Drehrohres (4) gerichtet ist, sodass Mantelpunkte repräsentierende dreidimensionale Positionsdaten erhalten werden, dass wenigstens ein Drehwinkelsensor zur Erfassung von den momentanen Drehwinkel des Drehrohrs (4) repräsentierenden Drehwinkeldaten oder ein Impulssensor zur Ermittlung der Rotation des Drehrohrs (4) vorgesehen ist und dass die Positionsdaten und die Drehwinkeldaten der Recheneinheit (14) zugeführt sind, wobei die Positionsdaten mit denjenigen Drehwinkeldaten verknüpft sind, die den momentanen Drehwinkel des Drehrohres (4) zum Zeitpunkt der Abtastung des jeweiligen Mantelpunktes repräsentieren.

16. Vorrichtung nach Anspruch 15, **dadurch gekennzeichnet, dass** Verarbeitungsmittel der Recheneinheit (14) ausgebildet sind, um aus den die Mantelpunkte repräsentierenden dreidimensionalen Positionsdaten und den jeweils zugeordneten Drehwinkeldaten ein dreidimensionales Modell des Drehrohrs (4) zu erstellen.

17. Vorrichtung nach Anspruch 16, **dadurch gekennzeichnet, dass** die Verarbeitungsmittel ausgebildet sind, um das dreidimensionale Modell mit einem zylindrischen Vergleichsmodell zu vergleichen, und dass Ausgabemittel (15) vorgesehen sind, die mit den Verarbeitungsmittel zu Ausgabe von lokalen Abweichungen des dreidimensionalen Modells vom Vergleichsmodell zusammenwirken.

18. Vorrichtung nach einem der Ansprüche 12 bis 17, **dadurch gekennzeichnet, dass** die wenigstens eine Abtastvorrichtung (12) auf an den beiden Enden der Laufrollenwelle (17) angeordnete Referenzobjekte (18), insbesondere Referenzkugel, gerichtet ist.

19. Vorrichtung nach Anspruch 18, **dadurch gekennzeichnet, dass** Verarbeitungsmittel der Recheneinheit (14) ausgebildet sind, um die Rotationsachse (8) der Laufrollen (7) rechnerisch als Verbindung der Referenzobjekte (18) zu erhalten und die Parallelität der Rotationsachse mit der Ofenachse (3) zu ermitteln und dass Ausgabemittel vorgesehen sind, die mit der Recheneinheit (14) zur Ausgabe von Abweichungen von der Parallelität zusammenwirken.

20. Vorrichtung nach einem der Ansprüche 12 bis 19, **dadurch gekennzeichnet, dass** der Drehrohrofen (1) ein Klinkerofen einer Zementherstellungsanlage oder Kalkofen einer Kalkherstellungsanlage ist.

## Claims

1. A method for detecting straightness deviations and deformations in a rotary kiln, the rotary drum of which features bearing rings that are spaced apart from one another in the axial direction and respectively supported on rollers, and that, the outer surface area (5) of the rotary drum (4), the bearing rings (6) and the rollers (7) and/or the shafts (17) of the rollers (7) is scanned in a contactless fashion with the aid of at least one scanning device (12), which is realized in the form of a 3D laser scanner (12) such that three-dimensional position data regarding the scanned objects is obtained, and in that the three-dimensional position data is evaluated with respect to the occurrence of a deviation of the rotary kiln axis (3) from a straight line, a deviation of the rotary drum (4) from a cylindrical shape and a deviation of the rotational axes (8) of the rollers from a line extending parallel to the rotary kiln axis (3), **characterized in that** an axial section (11) of the rotary kiln (1) is scanned with the at least one scanning device (12), **in that** scans are carried out in a plurality of axial sections (11) distributed along the length of the kiln, wherein one stationary reference point is respectively also measured during said scans, and **in that** the three-dimensional position data is correlated with the respective reference point in order to obtain relative position data, and the relative position data of several axial sections (11) is combined and jointly evaluated, wherein the coverage areas of the individual scans preferably overlap one another.

2. The method according to claim 1, **characterized in that** the scanning is carried out during the operation of the rotary kiln (1).

3. The method according to claim 1 or 2, **characterized in that** the rotary kiln (1) is scanned from both sides.

4. The method according to claim 1, 2 or 3, **characterized in that** three-dimensional position data representing points on the circumference of the bearing rings (6) is obtained during the scanning of the bearing rings (6), **in that** a circle is computationally adapted to the points on the circumference of each bearing ring (6), **in that** the centre of each circle is determined, **in that** the kiln axis is computationally obtained as the connection between the centres (9), **in that** the kiln axis is compared with a straight line, and **in that** possible deviations are output.

5. The method according to anyone of claims 1 to 4, **characterized in that** three-dimensional position data representing surface points is obtained during the scanning of the surface area (5) of the rotary drum (4), and **in that** said three-dimensional position data is linked with rotational angle data that represents the instantaneous rotational angle of the rotary drum (4) at the time of the scan of the respective surface point.

6. The method according to claim 5, **characterized in that** a three-dimensional model of the rotary drum (1) is generated from the three-dimensional position data representing the surface points and the respectively assigned rotational angle data.

7. The method according to claim 6, **characterized in that** the three-dimensional model is compared with a cylindrical comparison model, and **in that** local deviations of the three-dimensional model from the comparison model are indicated.

8. The method according to anyone of claims 1 to 7, **characterized in that** local deviations of the cross section of the rotary drum (4) from a circular cross section and deviations of the axis (3) of the rotary drum (4) from a straight line are indicated separately of one another.

9. The method according to anyone of claims 1 to 8, **characterized in that** the scanning of the rollers (7) includes the scanning of reference objects (18), particularly reference spheres, that are arranged on both ends of the rotational axes (8) of the rollers.

10. The method according to claim 9, **characterized in that** the rotational axis (8) of the rollers (7) is computationally obtained as the connection between the reference objects (18), and **in that** the parallelism of the rotational axis (8) with the kiln axis is determined and deviations from said parallelism are indicated.

11. The method according to anyone of claims 1 to 10, **characterized in that** the rotary kiln (1) is a clinker kiln of a cement manufacturing plant or a lime kiln of a lime manufacturing plant.

12. A rotary kiln with a device for detecting straightness deviations and deformations of the rotary kiln (1), particularly for carrying out a method according to anyone of claims 1 to 11, wherein the rotary drum (4) of the rotary kiln (1) features bearing rings (6) that are spaced apart from one another in the axial direction and respectively supported on rollers (7), and wherein at least one scanning device (12) that operates in a contactless fashion and is realized in the form of a 3D laser scanner (12) is arranged in order to scan the outer surface area (5) of the rotary drum (4), the bearing rings (6) and the rollers (7) and/or the shafts (17) and/or shaft end extensions of the rollers (7) in a contactless fashion and such that three-dimensional position data regarding the scanned objects is obtained, wherein the three-dimensional position data is fed to an arithmetic unit (14) that features an evaluation circuit in order to evaluate the three-dimensional position data with respect to the occurrence of a deviation of the rotary kiln axis (3) from a straight line, a deviation of the rotary drum (4) from a cylindrical shape and/or a deviation of the rotational axes (8) of the rollers from a line extending parallel to the rotary kiln axis (3), wherein the coverage area of the at least one scanning device (12) corresponds to an axial section (11) of the rotary kiln (1), wherein one or more scanning devices (12) are distributed along the length of the kiln, wherein the coverage areas of the individual scans preferably overlap one another and wherein at least one stationary reference point or at least one reference object (16) is arranged within the coverage area of each scanning device (12), and wherein the arithmetic unit (14) is designed for correlating the three-dimensional position data with the respective reference point in order to obtain relative position data, as well as for combining and jointly evaluating the relative position data of several axial sections (11).

13. The device according to claim 2, **characterized in that** at least one scanning device (12) is arranged on each side of the rotary kiln (1).

14. The device according to anyone of claims 12 to 13, **characterized in that** the scanning devices (12) are directed at the bearing rings (6) such that three-dimensional position data representing points on the circumference of the bearing rings (6) is obtained, **in that** the position data is fed to the arithmetic unit (14) and the arithmetic unit (14) features processing means for computationally adapting a circle to the points on the circumference of each bearing ring (6), for determining the centre (9) of each circle, for computationally obtaining the kiln axis as the connection between the centres (9) and for comparing the kiln axis with a straight line, and **in that** output means (15) are provided that cooperate with the arithmetic unit (14) in order to output possible deviations of the kiln axis from a straight line.

15. The device according to anyone of claims 12 to 14, **characterized in that** the at least one scanning device (12) is directed at the surface area (5) of the rotary drum (4) such that three-dimensional position data representing surface points is obtained, **in that** at least one rotational angle sensor for acquiring rotational angle data representing the instantaneous rotational angle of the rotary drum (4) or one pulse sensor for determining the rotation of the rotary drum (4) is provided and the position data and the rotational angle data is fed to the arithmetic unit (14), and **in that** the position data is linked with the rotational angle data that represents the instantaneous rotational angle of the rotary drum (4) at the time of the scan of the respective surface point.

16. The device according to claim 15, **characterized in that** processing means of the arithmetic unit (14) are designed for generating a three-dimensional model of the rotary drum (4) from the three-dimensional position data representing the surface points and the respectively assigned rotational angle data.

17. The device according to claim 16, **characterized in that** the processing means are designed for comparing the three-dimensional model with a cylindrical comparison model, and **in that** output means (15) are provided that cooperate with the processing means in order to output local deviations of the three-dimensional model from the comparison model.

18. The device according to anyone of claims 12 to 17, **characterized in that** the at least one scanning device (12) is directed at reference objects (18), particularly reference spheres, that are arranged on both ends of the roller shaft (17) .

19. The device according to claim 18, **characterized in that** processing means of the arithmetic unit (14) are designed for computationally obtaining the rotational axis (8) of the rollers (7) as the connection between the reference objects (18) and for determining the parallelism of the rotational axis with the kiln axis (3), and **in that** output means are provided that cooperate with the arithmetic unit (14) in order to output deviations from said parallelism.

20. The device according to anyone of claims 12 to 19, **characterized in that** the rotary kiln (1) is a clinker kiln of a cement manufacturing plant or a lime kiln of a lime manufacturing plant.

## Revendications

1. Procédé de détection d'écarts de rectitude et de déformations sur un four à tube rotatif dont le tube rotatif comporte des anneaux de roulement espacés les uns des autres dans le sens axial et en appui sur des rouleaux, l'enveloppe extérieure (5) du tube rotatif (4), les anneaux de roulement (6) et les rouleaux (7) et/ou les axes (17) des rouleaux (7) étant balayés avec au moins un dispositif de balayage sans contact (12), qui est agencé comme scanner tridimensionnel à laser (12), de façon que soient obtenues des données de position tridimensionnelles correspondant aux objets balayés, et les données de position tridimensionnelles étant exploitées quant à l'apparition d'un écart entre l'axe du four à tube rotatif (3) et une droite, d'un écart entre le tube rotatif (4) et une forme cylindrique et d'un écart entre les axes des rouleaux (8) et une parallèle à l'axe du four à tube rotatif (3), **caractérisé en ce qu'**une portion axiale (11) du four à tube rotatif (1) est balayée avec le au moins un dispositif de balayage et **en ce que** ces balayages sont effectués sur une pluralité de portions axiales (11) reparties sur la longueur du four, où, chaque fois, au moins un point fixe de référence est saisi en même temps et les données de position tridimensionnelles sont associées au point de référence respectif, afin d'obtenir des données de position relatives et **en ce que** les données de position relatives de plusieurs portions axiales (11) sont réunies et exploitées ensemble, dans lequel les rayons de balayages de chacun de balayage de preference se chevauchent.

2. Procédé selon la revendication 1, **caractérisé en ce que** le balayage est effectué pendant le fonctionnement du four à tube rotatif (1),

3. Procédé selon la revendication 1 ou 2, **caractérisé en ce que** le four à tube rotatif (1) est balayé des deux côtés.

4. Procédé selon la revendication 1, 2 ou 3, **caractérisé en ce que**, lors du balayage des anneaux de roulement (6), des données de position tridimensionnelles sont obtenues qui représentent des points périphériques des anneaux de roulement (6), **en ce que**, par voie de calcul, un cercle est adapté aux points périphériques des anneaux de roulement (6), que le centre de chaque cercle est déterminé, que l'axe du four est obtenu, par voie de calcul, comme liaison entre les centres (9), que l'axe du four est comparé à une droite et que des écarts éventuels sont édités.

5. Procédé selon l'une des revendications 1 à 4, **caractérisé en ce que**, lors du balayage de l'enveloppe (5) du tube rotatif (4), des données de position tridimensionnelles représentant des points de l'enveloppe sont obtenues qui sont associées à des données d'angle de rotation représentant l'angle de rotation momentané du tube rotatif (4) au moment du balayage du point de l'enveloppe respectif.

6. Procédé selon la revendication 5, **caractérisé en ce qu'**un modèle tridimensionnel du tube rotatif (4) est obtenu à partir des données de position tridimensionnelles représentant les points de l'enveloppe et des données d'angle de rotation associées.

7. Procédé selon la revendication 6, **caractérisé en ce que** le modèle tridimensionnel est comparé à un modèle comparatif cylindrique et **en ce que** des écarts locaux entre le modèle tridimensionnel et le modèle comparatif sont affichés.

8. Procédé selon l'une des revendications 1 à 7, **caractérisé en ce que** des écarts locaux entre les sections transversales du tube rotatif (4) et une section transversale circulaire et des écarts entre l'évolution de l'axe (3) du tube rotatif (4) et une évolution rectiligne sont affichés indépendamment les uns des autres.

9. Procédé selon l'une des revendications 1 à 8, **caractérisé en ce que** le balayage des rouleaux (7) inclut le balayage d'objets de référence (18), notamment de billes de référence, disposés aux deux extrémités des axes des rouleaux (8).

10. Procédé selon la revendication 9, **caractérisé en ce que** l'axe de rotation (8) des rouleaux (7) est obtenu par voie de calcul comme une liaison entre les objets de référence (18) et **en ce que** le parallélisme entre l'axe de rotation (8) et l'axe du four est déterminé et des écarts du parallélisme sont affichés.

11. Procédé selon l'une des revendications 1 à 10, **caractérisé en ce que** le four à tube rotatif (1) est un four à clinker d'une installation de fabrication de ciment ou un four à chaux d'une installation de fabrication de chaux.

12. Four à tube rotatif avec un dispositif pour détecter des écarts de rectitude et de déformations du four à tube rotatif (1), notamment pour mettre en oeuvre un procédé selon l'une des revendications 1 à 11, le tube rotatif (4) du four à tube rotatif (1) comportant des anneaux de roulement (6) espacés les uns des autres dans le sens axial et dont chacun est en appui sur des rouleaux (7), au moins un dispositif de balayage sans contact (12) étant disposé pour balayer sans contact l'enveloppe extérieure (5) du tube rotatif (4), les anneaux de roulement (6) et les rouleaux (7) et/ou les axes (17) des rouleaux (7) et/ou des rallonges d'extrémités des axes des rouleaux (7), de façon à pouvoir obtenir des données de position tridimensionnelles relatives aux objets balayés, les données de position tridimensionnelles étant envoyées à une unité de calcul (14) qui comprend un circuit d'exploitation pour exploiter les données de position tridimensionnelles quant à l'apparition d'un écart entre l'axe du four à tube rotatif (3) et une droite, d'un écart entre le tube rotatif (4) et une forme cylindrique et/ou d'un écart entre les axes des rouleaux (8) et une parallèle à l'axe du four à tube rotatif (3), le rayon de balayage du (ou des) dispositif(s) de balayage (12) correspondant à une portion axiale (11) du four à tube rotatif (1) et le ou une pluralité de dispositifs de balayage (12) étant disposé et réparti le long de la longueur du four, dans lequel les rayons de balayages de chacun de balayage de preference se chevauchent, et dans le rayon de balayage de chacun des dispositif de balayage (12) étant disposé au moins un point fixe de référence ou au moins un objet de référence (16), et l'unité de calcul (14) étant agencée pour associer les données de position tridimensionnelles au point de référence correspondant afin d'obtenir des données de position relatives et afin de réunir les données de position relatives de plusieurs portions axiales (11) et de les exploiter ensemble.

13. Dispositif selon la revendication 12, **caractérisé en ce qu'**un dispositif de balayage (12) est disposé de chaque côté du four à tube rotatif (1).

14. Dispositif selon l'une des revendications 12 à 13, **caractérisé en ce que** les dispositifs de balayage (12) sont orientés vers les anneaux de roulement (6) de façon que des données de position tridimensionnelles représentant des points périphériques des anneaux de roulement (6) soient obtenues, que les données de position sont envoyées à l'unité de calcul (14) et que l'unité de calcul (14) comprend des moyens d'exploitation pour adapter, par voie de calcul, un cercle aux points périphériques de chaque anneau de roulement (6), déterminer le centre (9) de chaque cercle, obtenir l'axe du four, par voie de calcul, comme liaison entre les centres (9), et comparer l'axe du four à une droite, et **en ce que** des moyens d'édition (15) sont prévus qui coopèrent avec l'unité de calcul (14) pour l'édition d'écarts éventuels entre l'axe du four et la droite.

15. Dispositif selon l'une des revendications 12 à 14, **caractérisé en ce que** le au moins un dispositif de balayage (12) est orienté vers l'enveloppe (5) du tube rotatif (4) afin que soient obtenues des données de position tridimensionnelles représentant des points de l'enveloppe, **en ce qu'**un capteur d'angle de rotation pour capter des données d'angle de rotation représentant l'angle de rotation momentané du tube rotatif (4) ou un capteur d'impulsions pour déterminer la rotation du tube rotatif (4) est prévu et **en ce que** les données de position et les données d'angle de rotation sont envoyées à l'unité de calcul (14), les données de position étant associées aux données d'angle de rotation qui représentent l'angle de rotation momentané du tube rotatif (4) au moment du balayage du point de l'enveloppe correspondant.

16. Dispositif selon la revendication 15, **caractérisé en ce que** des moyens d'exploitation de l'unité de calcul (14) sont agencés pour établir un modèle tridimensionnel du tube rotatif (4) à partir des données de position tridimensionnelles représentant les points de l'enveloppe et des données d'angle de rotation associées.

17. Dispositif selon la revendication 16, **caractérisé en ce que** les moyens d'exploitation sont agencés pour comparer le modèle tridimensionnel avec un modèle de référence cylindrique et **en ce que** des moyens d'édition (15) sont prévus qui coopèrent avec les moyens d'exploitation pour éditer des écarts locaux entre le modèle tridimensionnel et le modèle de référence.

18. Dispositif selon l'une des revendications 12 à 17, **caractérisé en ce que** le au moins un dispositif de balayage (12) est orienté vers des objets de référence (18), notamment des billes de référence, disposés aux deux extrémités de l'axe de rouleau (17).

19. Dispositif selon la revendication 18, **caractérisé en ce que** des moyens d'exploitation de l'unité de calcul (14) sont agencés pour obtenir l'axe de rotation (8) des rouleaux (7) par voie de calcul comme liaison entre les objets de référence (18) et déterminer le parallélisme entre l'axe de rotation et l'axe du four (3), et **en ce que** des moyens d'édition sont prévus pour éditer des écarts du parallélisme.

20. Dispositif selon l'une des revendications 12 à 19, **caractérisé en ce que** le four à tube rotatif (1) est un four à clinker d'une installation de fabrication de ciment ou un four à chaux d'une installation de fabrication de chaux.
